# EUROPEAN PATENT APPLICATION

(11) **EP 2 600 617 A2**
(43) Date of publication of application: **05.06.2013**
(21) Application number: 12182745.5
(22) Date of filing: 03.09.2012
(51) Int. Cl.: H04N 13/00

(54) **Image processing apparatus and image processing method**

(30) Priority: 02.12.2011 KR 20110128387
(71) Applicant: Samsung Electronics Co., Ltd., Suwon-si, Gyeonggi-do, 443-742 (KR)
(72) Inventor: Park, Hyun-sung, Gyeonggi-do (KR)
(74) Representative: Clark, David James

(57) **Abstract**

An image processing apparatus and an image processing method are provided to improve the degree of definition of an image when the image includes a 3D image. The image processing apparatus includes: an image receiver which receives an image signal; an image format detector which detects a format of the received image signal; an image processor which improves a degree of definition of the received image signal; and a controller which controls the image processor to improve the degree of definition of a left eye image and a right eye image according to the detected format of the image signal if the detected format of the image signal includes a 3D image in which the left eye image and the right eye image are displayed together in a single screen.

## Description

### BACKGROUND

### 1. Field

Apparatuses and methods consistent with the exemplary embodiments relate to an image processing apparatus and an image processing method, and more particularly, to an image processing apparatus and an image processing method which improves the degree of definition of an input three dimensional (3D) image.

### 2. Description of the Related Art

An image processing apparatus receives an image signal from an external image supply source, and processes and outputs the image signal after performing a series of image processing operations. Among such image processing operations, detail enhancement is generally used for a digital video system and is performed to improve the degree of definition of an image

The detail enhancement may extract a high or low frequency component from an image signal, reinforce and add the extracted frequency component to the original image, thereby improving the degree of definition of the image.

In line with the development of video technology, a 3D display which provides a user with a 3D visual effect has been developed. The mainstream of such 3D display technology provides a user with the 3D effect as a user wears 3D glasses which allow the user to view a left eye image and a right eye image with the user's left eye and right eye, respectively.

The glasses-type 3D display outputs the left eye image and the right eye image together. If a detail enhancement algorithm which is normally used for a 2D image is applied to the 3D image, it is difficult to make an accurate calculation and to improve the degree of definition of the image as intended.

### SUMMARY

Accordingly, one or more exemplary embodiments provide an image processing apparatus and an image processing method which improve the degree of definition of a 3D image.

According to an aspect of an exemplary embodiment, an image processing apparatus includes: an image receiver which receives an image signal; an image format detector which detects a format of the received image signal; an image processor which improves a degree of definition of the received image signal; and a controller which controls the image processor to improve the degree of definition of a left eye image and a right eye image according to the detected format of the image signal when the detected format of the image signal comprises a 3D image in which the left eye image and the right eye image are displayed together in a single screen.

The controller may control the image processor to improve the degree of definition depending on an arrangement of the left and right eye images.

The detected format of the image signal may include one of a side by side format and a top and bottom format.

The image processor may include a peaking filter which adjusts a gain of the image signal in a predetermined frequency band.

The controller may adjust a coefficient of the peaking filter and the predetermined frequency band in which the gain is adjusted, according to the detected format of the image signal.

The image processing apparatus may further include an image analyzer which analyzes at least one of average picture level (APL), noise, flatness and complexity of the image signal to improve the degree of definition of the image signal.

The controller may control the image analyzer to analyze a half of the image in a transverse direction when the detected format of the image signal comprises the side by side format, and controls the image analyzer to analyze the half of the image in a vertical direction when the detected format of the image signal comprises the top and bottom format.

According to an aspect of another exemplary embodiment, an image processing method includes: receiving an image signal; detecting a format of the received image signal; and improving the degree of definition of a left eye image and a right eye image according to the detected format of the image signal if the detected format of the image signal comprises a 3D image in which the left eye image and the right eye image are displayed together in a single screen.

The improving the degree of definition may include improving the degree of definition depending on an arrangement of the left eye image and the right eye image.

The detected format of the image signal may include one of a side by side format and a top and bottom format.

The improving the degree of definition may further include improving the degree of definition by applying a peaking filter which adjusts a gain of the image signal in a predetermined frequency band.

The image processing method may further include adjusting a coefficient of the peaking filter and the predetermined frequency band in which the gain is adjusted, according to the detected format of the image signal.

The image processing method may further include analyzing at least one of average picture level (APL), noise, flatness and complexity of the image signal to improve the degree of definition of the image signal.

The analyzing the image may include analyzing a half of the image in a transverse direction when the detected format of the image signal comprises the side by side format, and controls an image analyzer to analyze the half of the image in a vertical direction when the detected format of the image signal comprises the top and bottom format.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a block diagram of a detail enhancement block for improving the degree of definition of an image processing apparatus;
FIG. 2 is a control block diagram of the image processing apparatus according to an exemplary embodiment
FIG. 3 is a first control flowchart of an image processing method according to an exemplary embodiment;
FIG. 4 is a second control flowchart of the image processing method according to an exemplary embodiment; and
FIG. 5 is a third control flowchart of the image processing method according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary skill in the art. The exemplary embodiments may be embodied in various forms without being limited to the exemplary embodiments set forth herein. Descriptions of well-known parts are omitted for clarity, and like reference numerals refer to like elements throughout.

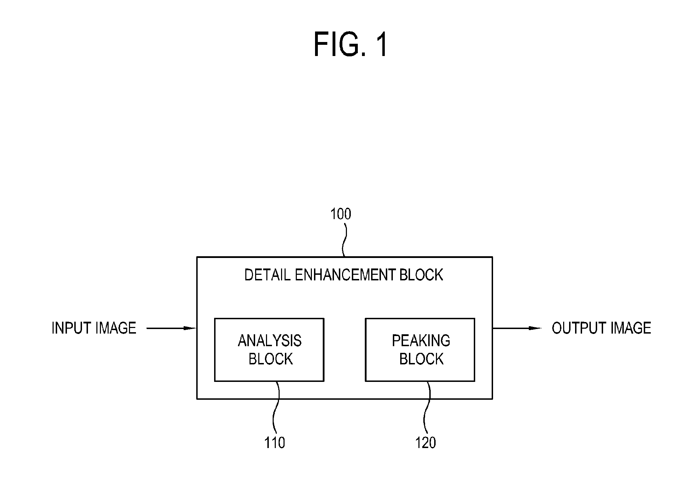

FIG. 1 illustrates a block diagram of a detail enhancement block for improving the degree of definition of an image processing apparatus.

As shown in FIG. 1 the image processing apparatus performs detail enhancement for an image signal which is input through a detail enhancement block 100. The detail enhancement block improves a degree of definition of an input image signal that is processed by the detail enhancement block. The detail enhancement block 100 includes an analysis block 110 and a peaking block 120.

The analysis block 110 analyzes an input image signal. The analysis block 110 analyzes various data that may be used for the improvement of a degree of definition of the input image signal such as average picture level (APL), noise, flatness and complexity of the image signal.

The peaking block 120 adjusts a gain of the input image signal in a predetermined frequency band and outputs the image signal according to the analysis result of the analysis block 110 to thereby improve the degree of definition of the output image signal.

However, the detail enhancement block 100 of the image processing apparatus in FIG. 1 improves the degree of definition of the image through the single analysis block 110 and the peaking block 120 regardless of whether the input image includes a 2D image or a 3D image.

A 3D display uses binocular disparity of a user, and separately displays a left eye image and a right eye image recognized by a user's left and right eyes. To do the foregoing, various formats of display images may be used. The 3D display realization includes a method of alternately displaying a left eye image and a right eye image by dividing the images temporally and a method of displaying left and right eye images by dividing the images spatially. In the case of the spatial division, the left eye image and the right eye image are simultaneously arranged and displayed side by side or top and bottom in a single screen. The left and right eye images are recognized by a user's left eye and right eye, respectively, by using the polarization features of light.

Even upon input of a 3D image signal, if the degree of definition is improved by the detail enhancement block 100, a frequency which is subject to gain adjustment by the peaking block 120 is changed. If a function of adjusting the peaking gain through APL of an input image is used, it is difficult to find an accurate APL of left and right eye images. Also, it is difficult to accurately calculate the amount of noise, flatness or complexity of an input image through the analysis block 110.

Hereinafter, the image processing apparatus and the image processing method will be explained to address the problem which arises when improving the definition of an input image signal in the detail enhancement block of the image processing apparatus in FIG. 1.

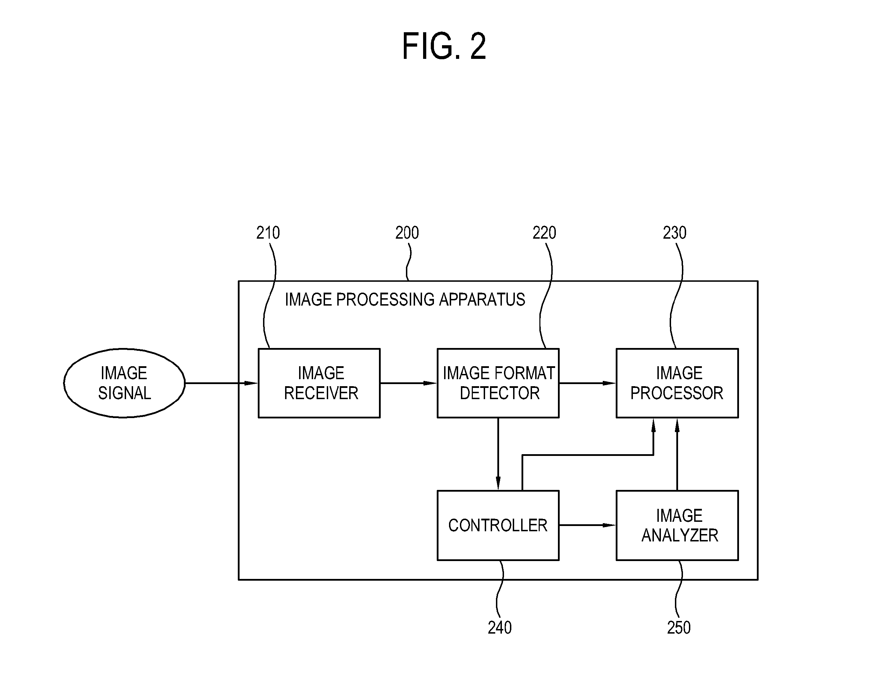

FIG. 2 is a control block diagram of the image processing apparatus 200 according to an exemplary embodiment.

As shown therein, the image processing apparatus 200 according to the present exemplary embodiment includes an image receiver 210, an image format detector 220, an image processor 230 and a controller 240. The image processing apparatus 200 may further include an image analyzer 250. The image processing apparatus 200 may include a TV or a set-top box, but is not limited thereto.

The image receiver 210 receives an image signal from an external image supply source. The image supply source may include a computer which includes a CPU and a graphic card and generates an image signal and supplies the image signal locally, a server which transmits an image signal to a network, a transmission device of a broadcasting station which transmits a broadcasting signal through airwaves or cable. The image receiver 210 may receive an image signal from various image supply sources such as the image supply sources discussed above.

The image signal which is received by the image receiver 210 may include a 2D image or a 3D image. A format of a 3D image may include a format in which a left eye image and a right eye image are included in a single screen. In this case, a 3D image may include a top and bottom format in which a left eye image and a right eye image vertically cross and are displayed, or a side by side format in which a left eye image and a right eye image horizontally cross and are displayed.

The image format detector 220 detects a format of an image signal which is received by the image receiver 210. As described above, the format of an image signal, whether a 2D or 3D image, may include one of the top and bottom format and the side by side format. The image format detector 220 may detect the format of the input image by using disparity information or relationship between peripheral pixel values of an input image. Detection of the format of the image may be performed by various methods. The detection result of the image format detector 220 may be utilized in the analysis of the image analyzer 250 and the adjustment of a coefficient of a peaking filter.

The image processor 230 improves the degree of definition of an image signal by a control of the controller 240 (which will be described later). The image processor 230 may include a peaking filter which adjusts a gain of an input image signal in a predetermined frequency band. The peaking filter adjusts the gain of the image signal according to a stored predetermined coefficient, and reinforces a predetermined frequency band. By a control of the controller 240, the coefficient of the peaking filter may be changed. If the gain is adjusted by the peaking filter, the detail level of a displayed image improves and this results in better picture quality.

The image processor 230 may further include a low pass filter, a band pass filter, a high pass filter and other known filters to select a predetermined frequency band.

The controller 240 controls elements which improve the degree of definition of an input image signal according to the present exemplary embodiment. The controller 240 may include a microprocessor such as a central processing unit (CPU) or a micro control unit (MCU).

If the detected format of the image signal includes a 3D image and displays a left eye image and a right eye image all together in a single screen, the controller 240 controls the image processor 230 to improve the degree of definition of the left and right eye images according to the format of the image signal. If the input image signal includes a 3D image signal, the degree of definition may be improved according to an arrangement of the left and right eye images.

As described above, in the case of a 3D image based on the space division, a left eye image and a right eye image are simultaneously displayed in a single screen. In this case, a frequency band for which the gain is adjusted through the peaking filter for each of the left and right eye images is determined, and a coefficient of the peaking filter is determined.

The controller 240 may determine whether an input 3D image signal has a side by side format or a top and bottom format, and improve the degree of definition of the image according to the format of the image.

In the case of the side by side format, a left eye image and a right eye image are alternately input in a transverse direction, and thus a vertical frequency of the 3D image is the same as a 2D image with the same resolution, but the horizontal frequency of the 3D image is twice that of a 2D image with the same resolution. Accordingly, at the time of setting the coefficient of the peaking filter, the frequency band for which the gain is adjusted through the peaking filter is determined in consideration of the horizontal frequency that has doubled.

In the case of the top and bottom format, a left eye image and a right eye image are alternately input in a vertical direction, and a horizontal frequency is the same as a 2D image with the same resolution, but the vertical frequency is twice that of a 2D image with the same resolution. Accordingly, at the time of setting the coefficient of the peaking filter, the frequency band for which the gain is adjusted through the peaking filter is determined in consideration of the vertical frequency that has doubled.

The image processing apparatus 200 according to the present exemplary embodiment may further include an image analyzer 250 which analyzes an image to improve the degree of definition of an input image signal. The image analyzer 250 may analyze average picture level (APL), noise, flatness and complexity of the input image signal.

If the format of the image signal is the side by side format, the controller 240 may control the image analyzer 250 to analyze a half of the image in a transverse direction. In the case of the side by side format, each of the left and right eye images are input in a size compressed into the half of the image in the transverse direction, and the other half of the image is processed as black color. The left and right eye images which are compressed into the half of the original size are combined into a single image. Accordingly, if APL, noise, etc. are calculated with respect to the left eye image and the right eye image, there may be a difference from the part which corresponds to the image that is to be displayed in practice. Thus, the image analyzer 250 may analyze only the half of the image in the transverse direction to thereby obtain accurate data which is necessary for improving the degree of definition of an input image signal.

If the format of the image signal is the top and bottom format, the controller 240 may control the image analyzer 250 to analyze the half of the image in a vertical direction. In the case of the top and bottom format, each of the left and right eye images are input in a size compressed into the half of the image in the vertical direction, and the other half of the image is processed as a black color. Thus, the image analyzer 250 may analyze only the half of the image in the vertical direction to thereby obtain accurate data which is necessary for improving the degree of definition of an input image signal.

The output image signal for which the degree of definition has improved, is decoded and scaled and then displayed on a display unit (not shown) of the image processing apparatus 200 or a display apparatus (not shown) connected to the image processing apparatus 200.

According to the image processing apparatus 200 as described above, the optimal algorithm applies to the format of the 3D input image to thereby improve the degree of definition of the image.

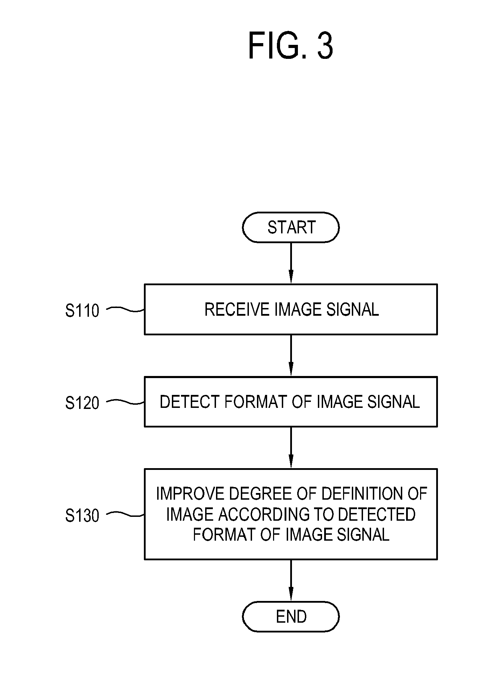

FIG. 3 is a first control flowchart of an image processing method according to an exemplary embodiment.

The image processing apparatus 200 which performs the image processing method according to the present exemplary embodiment may include a TV or a set-top box, but is not limited thereto. The image processing apparatus 200 receives an image signal from an external image supply source (S110). The received image signal may include a 2D or 3D image. A format of the 3D image may include a format or type which displays a left eye image and a right eye image in a single screen. The format of the 3D image may either be a top and bottom format in which the left eye image and the right eye image vertically cross each other and are displayed, or a side by side format in which the left and right eye images transversely cross each other and are displayed.

The image processing apparatus 200 detects the format of the received image signal (S120), and improves the degree of definition of the left and right eye images according to the detected format of the image signal (S130). The image processing apparatus 200 may improve the degree of definition according to the arrangement of the left and right eye images.

The improvement of a degree of definition by the image processing apparatus 200 may be performed by adjusting a gain of an input image in a predetermined frequency band. The image processing apparatus may include a low pass filter, a band pass filter, a high pass filter and other known filters used to select the predetermined frequency band.

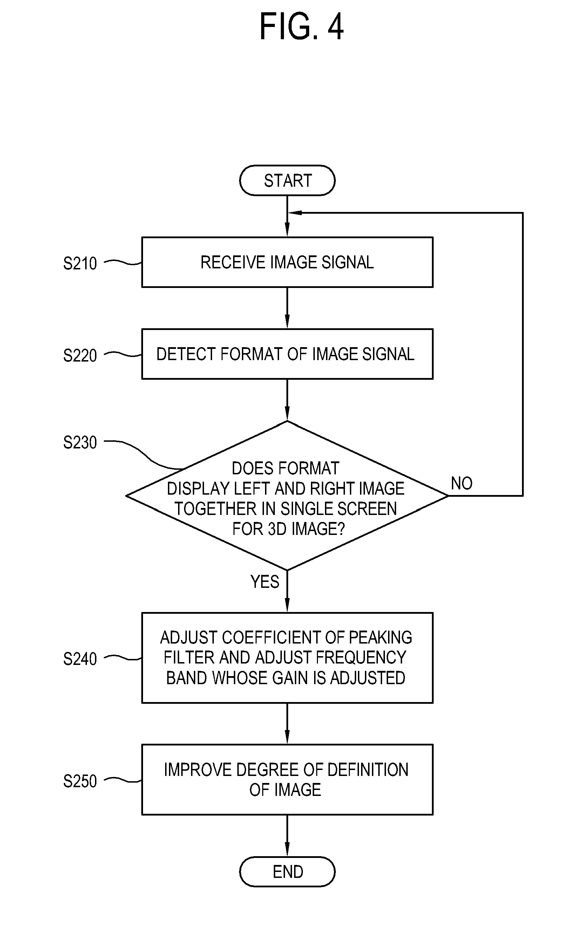

FIG. 4 is a second flowchart of the image processing method according to an exemplary embodiment.

The image processing apparatus 200 receives an image signal (S210), and detects the format of the image signal (S220).

If the detected format of the image signal is a format for displaying the left and right eye images together in a single screen (S230), the coefficient of the peaking filter is adjusted according to either the side by side format or the top and bottom format, and the frequency band whose gain is adjusted is determined (S240). Accordingly, the degree of definition of the image is improved according to the format of the input image signal (S250).

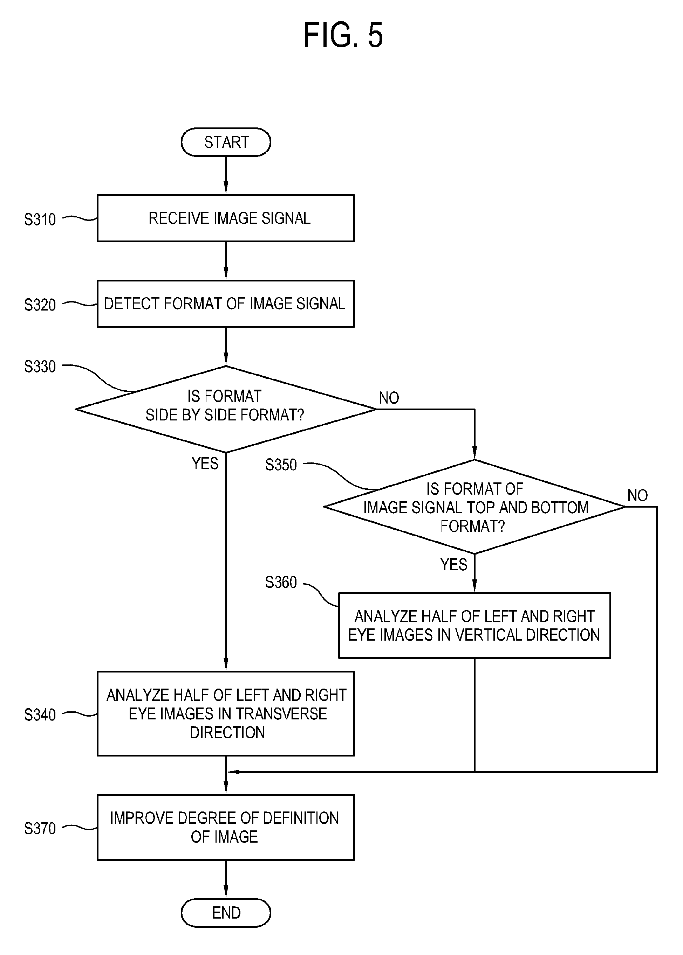

FIG. 5 is a third flowchart of the image processing method according to an exemplary embodiment.

The image processing apparatus 200 receives the image signal (S310), and detects the format of the image signal (S320).

If the detected format is the side by side format (S330), the image analyzer analyzes the half of the left and right eye images in the transverse direction (S340). In the case of the side by side format, each of the left and right eye images are input in a size compressed into the half of the image in the transverse direction, and the other half of the image is processed as black color. The left and right eye images which are compressed into the half of the original size are combined into a single image. Accordingly, if APL, noise, etc. are calculated with respect to the left eye image and the right eye image, there may be a difference from the part which corresponds to the image that is to be displayed in practice. Thus, the image analyzer 250 may analyze only the half of the image in the transverse direction to thereby obtain accurate data which is necessary for improving the degree of definition of an input image signal.

If the format of the image signal is the top and bottom format (S350), the image analyzer 250 analyzes the half of the image in a vertical direction (S360). In the case of the top and bottom format, each of the left and right eye images are input in a size compressed into the half of the image in the vertical direction, and the other half of the image is processed as black color. Thus, the image analyzer 250 may analyze only the half of the image in the vertical direction to thereby obtain accurate data which is necessary for improving the degree of definition of an input image signal.

If the analysis of the image is performed, the image processing apparatus 200 adjusts the coefficient of the peaking filter and improves the degree of definition accordingly (S370).

The output image signal whose degree of definition has been improved is decoded, and scaled to be displayed on a display unit (not shown) of the image processing apparatus 200 or a display apparatus (not shown) connected to the image processing apparatus 200. According to the image processing method described above, an optimal processing algorithm applied to the format of the 3D input image may improve the degree of definition of the 3D input image.

As described above, an image processing apparatus and an image processing method according to exemplary embodiments improves the degree of definition of an input image if such input image is a 3D image.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:
an image processor which improves a degree of definition of an image signal; and
a controller which controls the image processor to improve the degree of definition of a left eye image and a right eye image according to a format of the image signal when the format of the image signal comprises a 3D image in which the left eye image and the right eye image are displayed together in a single screen.

2. The image processing apparatus according to claim 1, wherein the controller controls the image processor to improve the degree of definition depending on an arrangement of the left and right eye images.

3. The image processing apparatus according to claim 2, wherein the format of the image signal comprises one of a side by side format and a top and bottom format.

4. The image processing apparatus according to claim 3, wherein the image processor comprises a peaking filter which adjusts a gain of the image signal in a predetermined frequency band.

5. The image processing apparatus according to claim 4, wherein the controller adjusts a coefficient of the peaking filter and the predetermined frequency band in which the gain is adjusted, according to the format of the image signal.

6. The image processing apparatus according to claim 3, further comprising:
an image analyzer which analyzes at least one of average picture level (APL), noise, flatness and complexity of the image signal to improve the degree of definition of the image signal.

7. The image processing apparatus according to claim 6, wherein the controller controls the image analyzer to analyze a half of the image in a transverse direction when the format of the image signal comprises the side by side format, and controls the image analyzer to analyze the half of the image in a vertical direction when the format of the image signal comprises the top and bottom format.

8. An image processing method comprising:
processing an image signal,
wherein processing the image signal comprises improving the degree of definition of a left eye image and a right eye image according to a format of the image signal when the format of the image signal comprises a 3D image in which the left eye image and the right eye image are displayed together in a single screen.

9. The image processing method according to claim 8, wherein the improving the degree of definition comprises improving the degree of definition depending on an arrangement of the left eye image and the right eye image.

10. The image processing method according to claim 9, wherein the format of the image signal comprises one of a side by side format and a top and bottom format.

11. The image processing method according to claim 10, wherein the improving the degree of definition further comprises improving the degree of definition by applying a peaking filter which adjusts a gain of the image signal in a predetermined frequency band.

12. The image processing method according to claim 11, further comprising adjusting a coefficient of the peaking filter and the predetermined frequency band in which the gain is adjusted, according to the format of the image signal.

13. The image processing method according to claim 10, further comprising:
analyzing at least one of average picture level (APL), noise, flatness and complexity of the image signal to improve the degree of definition of the image signal.

14. The image processing method according to claim 13, wherein the analyzing the image further comprises analyzing a half of the image in a transverse direction when the format of the image signal comprises the side by side format, and controls an image analyzer to analyze the half of the image in a vertical direction when the format of the image signal comprises the top and bottom format.
